## Europäisches Patentamt
## European Patent Office
## Office européen des brevets

(19)

(11) Publication number: **0 034 412**
A2

(12) # EUROPEAN PATENT APPLICATION

(21) Application number: **81300278.9**

(51) Int. Cl.³: **F 16 H 3/08**

(22) Date of filing: **22.01.81**

(30) Priority: **18.02.80 GB 8005376**
**22.02.80 GB 8006034**

(43) Date of publication of application:
**26.08.81 Bulletin 81.34**

(84) Designated Contracting States:
**AT BE DE FR GB IT NL SE**

(71) Applicant: **AUTOMOTIVE PRODUCTS LIMITED**
**Tachbrook Road**
**Leamington Spa Warwickshire CV31 3ER(GB)**

(72) Inventor: **Parsons, David**
**73 John O'Gaunt Road**
**Kenilworth Warwickshire(GB)**

(54) **Rotary power transmission.**

(57) A rotary power transmission has gear trains each being one of a set providing a series of increasing speed ratios, and two clutches (13, 14) independently operable and providing alternative drive paths through the gear trains between a common input (11) and a common output (21); the gear trains of alternate ratios in the set are driven respectively through one and the other clutch, a hydrodynamic coupling (12) being provided in series with the clutch (14) of the odd speed ratios only.

FIG.1.

EP 0 034 412 A2

"Rotary Power Transmission"

This invention relates to a rotary power transmission of the dual clutch kind by which is meant a transmission having gear trains, each being one of a set providing a series of increasing speed ratios, and two clutches independently operable and providing alternative drive paths through the gear trains between a common input and a common output, the gear trains of alternate speed ratios in the set being driven respectively through one and the other clutch.

The invention is particularly though not exclusively applicable to drive transmissions for motor vehicles.

Transmissions of the dual clutch kind are derived from conventional single clutch manual-change transmissions with which they can share many component parts.

Examples of transmissions of the dual clutch kind are shown in British Patent Specification Nos. 145,827 (Bramley-Moore), 585,716 (Kegresse), 795,260 (David Brown) and 1,125,267 (Bosch). To the best of our knowledge, none of these prior proposals have been commercially adopted.

One difficulty with transmissions of the dual clutch kind is in achieving satisfactory clutch control under all conditions of intended use. Two kinds of clutch control are required, clutch engagement for drive take-up from rest and clutch engagement for speed ratio changes involving a change of drive from one clutch to the other.

An experienced vehicle driver can sense the engine speed and rate of clutch engagement to achieve satisfactory drive take-up from rest. It has proved extremely difficult to provide a control mechanism which will faultlessly perform this function for all vehicle loads, road conditions and road gradients. Moreover an experienced driver can often cope with a malfunctioning clutch whereas a control mechanism may aggravate the symptoms of, for example, a slipping clutch driven plate.

Dynamic ratio changes from one clutch to another pose special problems of timing the rate of clutch engagement and disengagement to ensure that a smooth ratio change is effected without loss of drive or simultaneous drive through two ratios at once.

It is known to include a fluid coupling in the input shaft of a transmission. Although this can solve the problem of drive take-up from rest it cannot alleviate the problems of a dynamic ratio change since all transmission speed ratios are driven through the coupling. A disadvantage of fluid couplings is that they are inefficient in use since the turbine always slips relatively to the impeller. Although an additional clutch can be provided to lock the turbine and impeller together at small speed differentials it is difficult to arrange for smooth engagement and disengagement under all conditions of use. Furthermore, such clutches increase the complication and cost of fluid couplings.

It is an object of the present invention to provide a novel transmission which is substantially of the dual clutch kind and which overcomes the aforementioned problems.

According to the invention there is provided a rotary power transmission having gear trains each being one of a set providing a series of increasing speed ratios, and two clutches independently operable and providing alternative

-4-

drive paths through the gear trains between a common input and a common output, the gear trains of alternate ratios in the set being driven respectively through one and the other clutch, characterised thereby that a hydrodynamic coupling is provided in series with the clutch of the odd speed ratios in the set.

Preferably said hydrodynamic coupling and said clutches are co-axial.

In one embodiment one of said clutches precedes at least one respective gear train between said input and said output.

Preferably one of said clutches has a drive shaft extending from the input through said hydrodynamic coupling.

Other features of the invention are included in the following description of two preferred embodiments shown, by way of example only in the accompanying drawing in which:

Fig. 1 is a schematic illustration of a four speed vehicle transmission according to the invention; and

Fig. 2 is a variant of the transmission of Fig. 1.

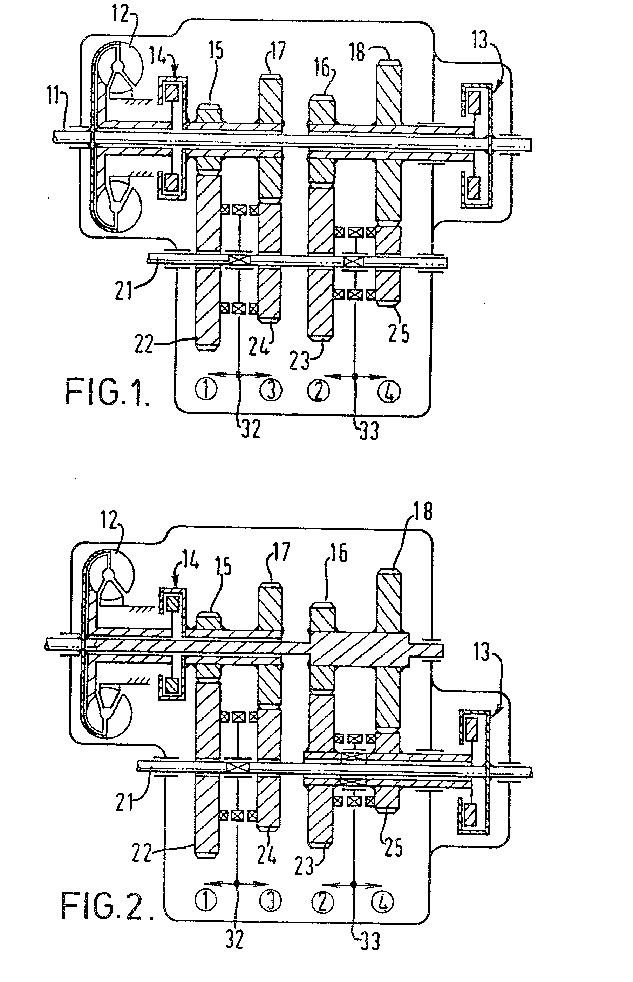

With reference to Fig. 1, an input shaft 11 is connected to the impeller of a torque converter 12 at one side of the transmission and to the drive member of a disengageable clutch 13 at the other side of the transmission.

The turbine of the torque converter 12 is connected through a disengageable clutch 14 to a tubular shaft co-axial about the input shaft 11 and carrying fast thereon gear wheels for rotation therewith, respectively for first speed ratio 15 and third speed ratio 17.

The driven member of the clutch 13 is connected to a tubular shaft also co-axial about the input shaft 11 and carrying fast thereon gear wheels for rotation therewith, respectively for second speed ratio 16 and fourth speed ratio 18.

A countershaft 21 has journalled thereon gear wheels 22-25 for individual rotation, each respectively in mesh with one of the wheels 15-18. The countershaft comprises the output of the transmission and is connected to the vehicle drive.

Synchroniser assemblies 32,33 are movable axially by ratio selection means to connect the countershaft to one or more of the gear wheels 22-25 in the manner hereinafter described.

Preferably automatic speed ratio selection would be effected using known automatic transmission control technology as described for example in "Torque Converters or Transmissions" by P.M. Heldt and published by Chilton. In this case the transmission would be provided with a selector lever having the usual DRIVE, NEUTRAL, REVERSE and PARK positions. However the means for speed ratio selection is not part of this invention.

Operation of the transmission is as follows :-

In NEUTRAL the synchroniser assemblies 32,33 are disengaged and no drive is transmitted to the countershaft 21.

When DRIVE is selected by the vehicle driver the transmission automatic control moves the synchroniser assembly 32 leftwards as viewed to couple the countershaft 21 with the gear wheel 22; the clutch 14 is engaged. As the driver accelerates the vehicle engine the torque converter transmits drive from the input shaft 11 through the clutch 14 and the gear train 15,22 to the countershaft 21, so providing smooth drive take-up from rest.

The transmission automatic control now pre-selects second speed ratio by moving synchroniser assembly 33 to connect gear wheel 23 to the countershaft 21. Consequently the second ratio drive train of gear wheels 23,16 and the driven plate of clutch 13 are driven idly by the countershaft 21, the drive member of the clutch 13 being driven constantly at engine speed by the shaft 11.

A ratio change from first speed to second speed is initiated by the transmission automatic control in response to the values of the usual control parameters such as throttle opening and road speed.

The clutch 13 is engaged as the clutch 14 is disengaged and driving torque is progressively transferred from the first ratio gear train to the second ratio gear train so providing a "power on" ratio change. The turbine of the torque converter 12 can slip relatively to the impeller to allow a cushioned drive take-up by the clutch 13. When the ratio change is completed the first ratio drive train is driven idly by the countershaft 21.

Dependent on the value of the automatic control parameters the synchroniser assembly 32 will remain with first speed ratio selected or be moved to select third speed ratio by connecting gear wheel 24 to the countershaft 21. Alternatively synchroniser assembly 32 may shift to the neutral position until the automatic control indicates an imminent ratio change.

Thus the transmission automatic control is arranged to pre-select the next required speed ratio in sequence, the ratio change being automatically made at the appropriate moment by changing drive from the torque converter 12 and clutch 14 to the clutch 13 or vice-versa.

It will be apparent that the torque converter 12 is used for drive when third speed ratio is required and the clutch 13 when fourth speed ratio is required. Thus direct drive in top ratio with no loss of efficiency is achieved.

Since the clutch 13 is only used for ratio changes and not for drive take-up from rest, the required capacity is much reduced and the clutch can be of small size compared with a conventional main drive clutch.

With reference to Fig. 2 there is shown a modification of the transmission where the clutch 13 is co-axial with the countershaft 21.

The operation of the transmission is as previously described for the embodiment of Fig. 1. Speed ratios are pre-selected by the automatic control in accordance with the usual control parameters and, at the appropriate moment, the automatic control effects a ratio change by changing drive from the torque converter 12 and clutch 14 to the clutch 13 or vice-versa.

Other embodiments of the invention are possible. For example an additional set of gear wheels could be provided between the transmission shafts so that the output shaft is co-axial with the input shaft. Such an arrangement would be suitable for a motor vehicle having a front engine and rear wheel drive.

Reverse speed ratio may be obtained by any known means, for example, the use of a seperate gear train having a lay gear to reverse rotation of the drive. Such an arrangement may be found in many manual-change transmissions.

Claims

1.    A rotary power transmission having gear trains each being one of a set providing a series of increasing speed ratios, and two clutches (13,14) independently operable and providing alternative drive paths through the gear trains between a common input (11) and a common output (21), the gear trains of alternate ratios in the set being driven respectively through one and the other clutch, characterised thereby that a hydrodynamic coupling (12) is provided in series with the clutch (14) of the odd speed ratios in the set.

2.    A transmission according to Claim 1, characterised thereby that said hydrodynamic coupling (12) and said clutches (13,14) are co-axial.

3.    A transmission according to Claim 2, characterised thereby that one of said clutches (13) has a drive shaft extending from the input (11) through said hydrodynamic coupling (12).

4.      A transmission according to Claim 1,
characterised thereby that one of said clutches (14)
precedes at least one respective gear train (15,22)
between said input (11) and said output (21).

5.   .   A transmission according to Claim 5,
characterised thereby that the other of said clutches
(13) precedes at least one respective gear train
(18,25) between said input (11) and said output (21).

FIG.1.

FIG.2.